# EUROPÄISCHE PATENTSCHRIFT

(11) **EP 3 907 404 B1**
(45) Veröffentlichungstag und Bekanntmachung des Hinweises auf die Patenterteilung: **07.06.2023**
(21) Anmeldenummer: 21165545.1
(22) Anmeldetag: 29.03.2021
(51) Int. Cl.: F03D 9/00, F03D 9/19

(54) **FLUID- UND/ODER ENERGIEBEREITSTELLUNGSEINRICHTUNG**
FLUID AND / OR ENERGY SUPPLY DEVICE
DISPOSITIF DE FOURNITURE DE FLUIDE ET/OU D'ÉNERGIE

(30) Priorität: 04.05.2020 DE 102020205593
(43) Veröffentlichungstag der Anmeldung: 10.11.2021
(73) Patentinhaber: Schierack, Horst, 53343 Wachtberg (DE)
(72) Erfinder: Schierack, Horst, 53343 Wachtberg (DE); Holmig, Rainer, 04808 Wurzen (DE)
(74) Vertreter: Dietz, Christopher Friedrich

(56) Entgegenhaltungen:
- WO-A1-01/36817
- WO-A1-2020/016226
- DE-A1-102018 125 238
- FR-A1- 2 854 205
- US-B1- 7 471 010

## Beschreibung

Die Erfindung betrifft eine Fluid- und/oder Energiebereitstellungseinrichtung, mit einer Solarnutzungseinrichtung und/oder einer Windkraftanlage sowie mit einer Fluidspeichereinrichtung, wobei die Fluid- und/oder Energiebereitstellungseinrichtung dazu ausgebildet ist, mittels von der Solarnutzungseinrichtung und/oder von der Windkraftanlage bereitgestellter Energie Wasser durch Elektrolyse in wenigstens ein Fluid aufzuspalten und das Fluid mittels der Fluidspeichervorrichtung zwischenzuspeichern, wobei die Fluidspeichervorrichtung über eine Tankanordnung für das Fluid verfügt, die einen Speichertank in einem mittels einer Gründung verankerten, sich in axialer Richtung bezüglich seiner Längsmittelachse in die Gründung hinein erstreckenden Speicherturm aufweist.

Aus dem Stand der Technik ist beispielsweise die Druckschrift WO 2020/016226 A1 bekannt. Diese beschreibt eine Fluidspeichervorrichtung für eine Fluid- und/oder Energiebereitstellungseinrichtung. Diese zeichnet sich durch eine erste Tankanordnung für ein erstes Fluid und eine zweite Tankanordnung für ein zweites Fluid aus, wobei die erste Tankanordnung einen ersten Speichertank in einem mittels einer Gründung verankerten, sich in axialer Richtung bezüglich seiner Längsmittelachse in die Gründung hinein erstreckenden Speicherturm und die zweite Tankanordnung mehrere separat angeordnete zweite Speichertanks aufweist, die in Umfangsrichtung um den Speicherturm verteilt angeordnet, zur Versteifung des Speicherturms an diesem befestigt und sich an der Gründung abstützen und/oder an dieser befestigt sind und/oder mehrfach an dem Speicherturm befestigt sind.

Es ist Aufgabe der Erfindung, eine Fluid- und/oder Energiebereitstellungseinrichtung vorzuschlagen, welche gegenüber bekannten Fluid- und/oder Energiebereitstellungseinrichtungen Vorteile aufweist, insbesondere eine höhere Dauerfestigkeit aufweist.

Dies wird erfindungsgemäß mit einer Fluid- und/oder Energiebereitstellungseinrichtung mit den Merkmalen des Anspruchs 1 erreicht. Dabei ist vorgesehen, dass die Tankanordnung in axialer Richtung bezüglich der Längsmittelachse des Speicherturms von der Gründung einen Abstand aufweist, der mindestens maximalen Abmessungen des Speicherturms in radialer Richtung entspricht.

Die Fluid- und/oder Energiebereitstellungseinrichtung dient zur Bereitstellung wenigstens eines Fluids, insbesondere mehrerer Fluide, und/oder von Energie, insbesondere von elektrischer Energie. Hierbei wird regenerative Energie, insbesondere solare Energie und/oder Windenergie, zur Erzeugung und nachfolgenden Bereitstellung des wenigstens einen Fluids und/oder zur Bereitstellung von elektrischer Energie herangezogen. Konkret ist es vorgesehen, die von der Solarnutzungseinrichtung und/oder von der Windkraftanlage bereitgestellte regenerative Energie zum Aufspalten von Wasser durch Elektrolyse zu verwenden, sodass Wasserstoff und Sauerstoff anfallen.

Wenigstens eines der bei der Elektrolyse anfallenden Fluide, also Wasserstoff oder Sauerstoff, wird anschließend in der Fluidspeichervorrichtung zwischengespeichert. Das Fluid kann als Gas oder aber in verflüssigter Form zwischengespeichert werden. Beispielsweise wird lediglich der Wasserstoff oder der Sauerstoff zwischengespeichert und der jeweils andere Stoff abgeführt. Bevorzugt dient die Fluid- und/oder Energiebereitstellungseinrichtung dem Bereitstellen zumindest des Wasserstoffs; in diesem Fall wird der Sauerstoff abgeführt und nicht zwischengespeichert. Besonders bevorzugt werden jedoch sowohl der Wasserstoff als auch der Sauerstoff mittels der Fluidspeichervorrichtung zwischengespeichert.

Grundsätzlich ist es vorgesehen, die von der Solarnutzungseinrichtung und/oder von der Windkraftanlage bereitgestellte regenerative Energie zumindest zeitweise zum Aufspalten des Wassers durch Elektrolyse zu verwenden. Zeitweise kann jedoch auch die regenerative Energie unmittelbar in elektrische Energie umgewandelt werden. Anders ausgedrückt ist es beispielsweise vorgesehen, die Energie entweder unmittelbar in elektrische Energie umzuwandeln oder die Energie zum Erzeugen des wenigstens einen Fluids zu nutzen. Selbstverständlich kann es auch vorgesehen sein, die Energie - in Abhängigkeit von ihrer Verfügbarkeit - teilweise zur Bereitstellung der elektrischen Energie und teilweise zum Erzeugen des wenigstens einen Fluids heranzuziehen.

Das wenigstens eine Fluid, welches unter dem Einsatz der regenerativen Energie erzeugt wurde, kann ebenfalls zur Bereitstellung von elektrischer Energie verwendet werden, insbesondere falls momentan keine regenerative Energie oder zu wenig regenerative Energie zur unmittelbaren Bereitstellung der elektrischen Energie verfügbar ist. Beispielsweise ist es vorgesehen, im Falle eines Überschusses von regenerativer Energie diese zumindest teilweise zur Erzeugung des wenigstens einen Fluids zu verwenden. Dieses wird in der Fluidspeichervorrichtung zwischengespeichert, insbesondere bei Überdruck, also einem Druck, der höher ist als ein Umgebungsdruck. Liegt nachfolgend ein Mangel an regenerativer Energie vor, kann der Bedarf an elektrischer Energie nicht oder zumindest nicht allein mittels der regenerativen Energie gedeckt werden, so wird das wenigstens eine Fluid der Fluidspeichervorrichtung entnommen und zur zumindest teilweisen oder vollständigen Bereitstellung der elektrischen Energie herangezogen.

Die Fluid- und/oder Energiebereitstellungseinrichtung ist zur Nutzung mehrerer unterschiedlicher regenerativer Energiequellen vorgesehen und ausgebildet. Hierzu verfügt sie über eine Einrichtung zur Nutzung solarer Energie, nämlich die Solarnutzungseinrichtung, und eine Einrichtung zur Nutzung von Windkraft, nämlich die Windkraftanlage. Die Solarnutzungseinrichtung weist beispielsweise wenigstens einen Solarkollektor, insbesondere einen Parabolkollektor, und/oder wenigstens ein Solarmodul auf. Das Solarmodul kann auch als Solarzellenmodul bezeichnet werden.

Der Solarkollektor ist zur Durchströmung mit einem Arbeitsfluid vorgesehen und ausgebildet. Bei hinreichender Sonneneinstrahlung erwärmt sich das den Solarkollektor durchströmende Arbeitsfluid, nimmt also Wärme auf. Diese Wärme kann nachfolgend zur Erzeugung von elektrischer Energie verwendet werden, welche wiederum unmittelbar bereitgestellt oder zur Umwandlung von Wasser in das wenigstens eine Fluid herangezogen werden kann. Das Solarmodul, welches auch als Photovoltaikmodul bezeichnet werden kann, dient hingegen der direkten Umwandlung von solarer Energie in elektrische Energie. Auch diese elektrische Energie kann gemäß den vorstehenden Ausführungen verwendet werden. Zusätzlich oder alternativ wird die vorliegende Wärme zwischengespeichert, nämlich mittels einer geeigneten Energiespeichereinrichtung.

Zusätzlich zu der Solarnutzungseinrichtung ist die Windkraftanlage vorgesehen. Diese dient einer Umwandlung von Windenergie in elektrische Energie. Hierzu verfügt die Windkraftanlage vorzugsweise über einen Rotor, der mehrere Rotorblätter aufweist, und einen mechanisch mit dem Rotor gekoppelten Generator. Auch diese elektrische Energie kann unmittelbar bereitgestellt und/oder zur Umwandlung von Wasser in das wenigstens eine Fluid verwendet werden. Es kann auch vorgesehen sein, die von der Windkraftanlage und/oder der Solarnutzungseinrichtung, also insbesondere von dem Solarmodul beziehungsweise Photovoltaikmodul, bereitgestellte elektrische Energie in Wärme umzuwandeln und zwischenzuspeichern, insbesondere in derselben Energiespeichereinrichtung wie die Wärme der Solarnutzungseinrichtung.

Hierzu ist beispielsweise ein Durchlauferhitzer vorgesehen, mittels welchem die elektrische Energie in Wärme umgewandelt wird, die der Energiespeichereinrichtung zugeführt wird. Der Durchlauferhitzer ist bevorzugt ein Druckdurchlauferhitzer. Er kann zum Beispiel an dem Speicherturm und/oder in dem Untergrund, auf welchem der Speicherturm angeordnet ist, vorliegen. Bevorzugt ist der Durchlauferhitzer an einer Außenwand des Speicherturms befestigt, insbesondere an der Tankanordnung beziehungsweise dem Speichertank. Bevorzugt sind die Solarnutzungseinrichtung und/oder die Windkraftanlage an der Fluidspeichervorrichtung angeordnet. Insbesondere sind sie an dem Speicherturm befestigt beziehungsweise stützen sich über den Speicherturm an der Gründung ab.

Besonders bevorzugt ist eine Ausgestaltung der Fluid- und/oder Energiebereitstellungseinrichtung, welche zusätzlich zu der Solarnutzungseinrichtung und/oder der Windkraftanlage eine Brennstoffzelleneinrichtung aufweist, mittels welcher das wenigstens eine Fluid in elektrische Energie umgesetzt werden kann. Eine derartige Ausgestaltung ermöglicht ein dauerhaftes Bereitstellen von elektrischer Energie. Steht regenerative Energie zur Verfügung, so wird diese in elektrische Energie umgewandelt, welche wiederum zumindest teilweise unmittelbar bereitgestellt und/oder zumindest teilweise zur Umwandlung von Wasser in das wenigstens eine Fluid verwendet wird. Das wenigstens eine Fluid wird in der Fluidspeichervorrichtung zwischengespeichert. Steht keine oder nicht hinreichend solare Energie zur Verfügung, so wird das wenigstens eine Fluid der Brennstoffzelle zur Erzeugung elektrischer Energie zugeführt. Diese kann anschließend von der Fluid- und/oder der Energiebereitstellungseinrichtung bereitgestellt werden, insbesondere für einen Verbraucher. Das Bereitstellen der mittels der Brennstoffzelle erzeugten elektrischen Energie erfolgt alternativ oder zusätzlich zu der direkten Bereitstellung der mittels der Solarnutzungseinrichtung und/oder der Windkraftanlage erzeugten elektrischen Energie.

Die Fluidspeichervorrichtung ist Bestandteil der Fluid- und/oder Energiebereitstellungseinrichtung. Sie ist kompakt und platzsparend ausgebildet und kann zudem zur Halterung der Solarnutzungseinrichtung und/oder der Windkraftanlage herangezogen werden. Die Fluidspeichervorrichtung verfügt über zumindest eine Tankanordnung für das wenigstens eine Fluid. Die Tankanordnung ist zur Zwischenspeicherung des Fluids vorgesehen und ausgebildet. Als das Fluid wird bevorzugt das bei der Hydrolyse anfallende Wasserstoff oder - alternativ - der Sauerstoff verwendet.

Die Tankanordnung weist den Speichertank auf, vorzugsweise genau einen Speichertank. Das für das Fluid von der Fluidspeichervorrichtung bereitgestellte Speichervolumen wird also allein mittels des Speichertanks bereitgestellt. Der Speichertank ist beispielsweise zur Aufnahme des wenigstens einen Fluids unter einem Druck von mindestens 100 bar, mindestens 150 bar, mindestens 200 bar, mindestens 250 bar oder mindestens 300 bar ausgebildet, weist also eine entsprechende Druckfestigkeit auf. Der Speichertank liegt in dem Speicherturm vor, welcher wiederum mit der Gründung verbunden ist. Beispielsweise stützt sich der Speicherturm über einen Tragring an der Gründung ab. Der Tragring ist an dem Speicherturm befestigt, beispielsweise mit ihm verschweißt und/oder verschraubt. Der Tragring ist vorzugsweise in Umfangsrichtung durchgehend an dem Speicherturm ausgebildet, umgreift diesen also vollständig.

Der Speichertank wird von einer Wand des Speicherturms begrenzt beziehungsweise eingeschlossen. Die Gründung dient der ortsfesten Anordnung und Befestigung des Speicherturms bezüglich eines Untergrunds. Bevorzugt weist der Speicherturm einen zylindrischen, insbesondere einen kreiszylindrischen, Querschnitt auf. Besonders bevorzugt besteht er zumindest bereichsweise aus Metall, insbesondere setzt er sich aus wenigstens einem Metallrohr, bevorzugt mehreren miteinander verbundenen Metallrohren, zusammen. Die Metallrohre sind endseitig mittels eines Deckels verschlossen. Das bedeutet, dass der Speicherturm und dementsprechend der Speichertank der Tankanordnung aus Standardkomponenten auf besonders kostengünstige Art und Weise aufgebaut werden können. Die Gründung weist beispielsweise ein Fundament auf, welches bevorzugt aus Beton besteht. Es kann jedoch alternativ auch ein anderes Material für das Fundament verwendet werden. In jedem Fall stützt sich der Speicherturm über die Gründung, insbesondere über das Fundament, an dem Untergrund ab.

Um eine besonders hohe Standfestigkeit des Speicherturms zu erzielen, greift der Speicherturm in die Gründung ein. Das bedeutet, dass der Speicherturm vorzugsweise in axialer Richtung einerseits in den Untergrund, auf oder in welchem die Gründung angeordnet ist, oder zumindest in die Gründung eingreift, und andererseits sich in die von dem Untergrund beziehungsweise die Gründung abgewandte Richtung erstreckt. Die Gründung kann in oder auf dem Untergrund angeordnet sein, insbesondere umfasst sie das Fundament. Über das Fundament wird eine Gewichtskraft des Speicherturms in den Untergrund eingetragen, insbesondere derart, dass die Gewichtskraft auf eine Fläche des Untergrunds verteilt wird, die größer ist als eine Querschnittsfläche des Speicherturms.

Beispielsweise stützt sich der Speicherturm über eine Stützzarge der Gründung an dem Untergrund ab. Unter der Stützzarge ist zum Beispiel ein hohlzylindrisches, insbesondere hohlkreiszylindrisches Stützteil zu verstehen, in welches der Speicherturm eingreift. Bevorzugt stützt sich der Speicherturm mit dem vorstehend erwähnten Tragring an einer Stirnseite der Stützzarge ab, nämlich auf ihrer dem Untergrund abgewandten Seite. Mit jeder der beschriebenen Ausgestaltungen wird zum einen eine günstige Schwerpunktlage des Speicherturms erzielt. Andererseits ergeben sich weitere Vorteile, auf welche nachfolgend noch eingegangen werden wird.

In axialer Richtung bezüglich der Längsmittelachse des Speicherturms gesehen weist der Speicherturm ausgehend von der Gründung in die von dem Untergrund abgewandte Richtung erste Abmessungen auf, wohingegen der in die Gründung eingreifende Teil des Speicherturms in axialer Richtung zweite Abmessungen aufweist. Gesamtabmessungen des Speicherturms in axialer Richtung setzen sich insoweit aus den ersten Abmessungen und den zweiten Abmessungen zusammen. Insbesondere ergibt sich die Gesamtabmessungen als Summe aus den ersten Abmessungen und den zweiten Abmessungen.

Die ersten Abmessungen sind größer als die zweiten Abmessungen, beispielsweise um einen Faktor von mindestens 5, mindestens 7,5, mindestens 10, mindestens 11, mindestens 12, mindestens 13, mindestens 14 oder mindestens 15. Beispielsweise weist der Speicherturm insgesamt in axialer Richtung Abmessungen von mindestens 20 m, vorzugsweise mindestens 25 m oder mindestens 27,5 m auf. Hiervon sind mindestens 5 %, mindestens 7,5 % oder mindestens 10 % in der Gründung und dem Untergrund aufgenommen. Beispielsweise sind wenigstens 2 m des Speicherturms in der Gründung und dem Untergrund angeordnet. Bevorzugt betragen die ersten Abmessungen höchstens 30 m, höchstens 27,5 m oder höchstens 25 m, sodass der Speicherturm maximal um die genannten Werte über die Gründung in die dem Untergrund abgewandte Richtung übersteht.

Um trotz dieser Abmessungen eine hinreichende Festigkeit des Speicherturms bei gleichzeitig begrenzter Materialstärke des Speicherturms zu erzielen, ist die Tankanordnung in axialer Richtung bezüglich der Längsmittelachse des Speicherturms von der Gründung beabstandet angeordnet. Konkret beträgt der Abstand zwischen der Tankanordnung und der Gründung mindestens den maximalen Abmessungen des Speicherturms in radialer Richtung, bezogen auf eine Längsmittelachse des Speicherturms. Unter den maximalen Abmessungen des Speicherturms in radialer Richtung sind die über seine Erstreckung in axialer Richtung größten Abmessungen in radialer Richtung zu verstehen. Beispielsweise liegen die maximalen Abmessungen im Bereich der Gründung vor, insbesondere in der Gründung oder unmittelbar anschließend an die Gründung. Die maximalen Abmessungen sind zum Beispiel der maximale Durchmesser des Speicherturms über seine gesamte Erstreckung in axialer Richtung gesehen.

In jedem Fall ist es also vorgesehen, dass die Tankanordnung im Längsschnitt bezüglich der Längsmittelachse gesehen nicht in Überdeckung mit der Gründung steht, sondern von dieser beabstandet ist, nämlich um den genannten Abstand. Hierdurch wird eine Beanspruchung des Speicherturms durch eine Druckbeaufschlagung durch das wenigstens eine Fluid vermieden, sodass der Speicherturm eine höhere Standfestigkeit aufweist. Besonders bevorzugt ist der Abstand zwischen der Tankanordnung und der Gründung größer als die maximalen Abmessungen des Speicherturms in radialer Richtung, beispielsweise entspricht er mindestens einem ganzzahligen Vielfachen der maximalen Abmessungen. Beispielsweise ist der Abstand um einen Faktor von mindestens 2, mindesten 3, mindestens 4 oder mindestens 5 größer als die maximalen Abmessungen des Speicherturms. In absoluten Werten ausgedrückt beträgt der Abstand zum Beispiel mindestens 10 m.

Die Tankanordnung beziehungsweise der Speichertank sind in radialer Richtung nach außen unmittelbar von einer Wand des Speicherturms begrenzt. Es ist also nicht vorgesehen, in dem Speicherturm einen von dem Speicherturm verschiedenen Speichertank anzuordnen. Vielmehr wird der Speichertank von dem Speicherturm beziehungsweise dessen Wand zumindest bereichsweise ausgebildet. Die Wandstärke des Speicherturms beträgt vorzugsweise mindestens 15 mm, mindestens 20 mm, mindestens 25 mm, mindestens 30 mm oder - bevorzugt - mindestens 35 mm. Umgekehrt beträgt die Wandstärke höchstens 50 mm, höchstens 45 mm oder höchstens 40 mm. Besonders bevorzugt wird also eine Wandstärke von mindestens 15 mm und höchstens 50 mm, mindestens 20 mm und höchstens 45 mm, mindestens 25 mm und höchstens 40 mm oder mindestens 30 mm und höchstens 40 mm verwendet.

Der Bereich des Speicherturms, der in axialer Richtung gesehen zwischen der Tankanordnung beziehungsweise dem Speichertank und der Gründung beziehungsweise dem Fundament vorliegt, ist drucklos oder zumindest höchstens mit einem Druck beaufschlagt, der geringer ist als der in dem Speichertank vorliegende Druck. Das bedeutet, dieser Bereich strömungstechnisch von der Tankanordnung beziehungsweise dem Speichertank getrennt ist. Beispielsweise liegt in diesem Bereich Luft, insbesondere Umgebungsluft vor. Bevorzugt ist der Bereich strömungstechnisch mit der Außenumgebung des Speicherturms verbunden, sodass zwischen dem Bereich und der Au-ßenumgebung ein Druckausgleich realisiert ist. Entsprechend liegt in dem Bereich der gleiche Druck vor wie in der Außenumgebung, der wiederum von dem Druck in dem Speichertank verschieden ist. Beispielsweise beträgt der Druck in dem Bereich höchstens 10 bar, höchstens 5 bar, höchstens 2,5 bar, höchstens 2 bar, höchstens 1,5 bar oder höchstens 1bar. Auch der Bereich wird in radialer Richtung nach außen von der Wand des Speicherturms begrenzt. Die den Bereich umgreifende Wand weist vorzugsweise die gleiche Wandstärke auf wie die den Speichertank begrenzende Wand.

Die beschriebene Ausgestaltung der Fluidspeichervorrichtung ermöglicht eine zuverlässige und sichere Zwischenspeicherung des wenigstens einen Fluids bei gleichzeitig geringem Platzbedarf, insbesondere eine Zwischenspeicherung des wenigstens einen Fluids unter hohem Druck. Zudem kann die Fluidspeichervorrichtung zur Abstützung von Elementen der Fluid- und/oder Energiebereitstellungseinrichtung herangezogen werden, beispielsweise sind an dem Speicherturm eine Traganordnung für die Solarnutzungseinrichtung und/oder eine Stützanordnung für die Windkraftanlage angeordnet und befestigt. Insgesamt ist durch die Realisierung der Solarnutzungseinrichtung und der Windkraftanlage ein besonders ökologischer Betrieb der Fluid- und/oder Energiebereitstellungseinrichtung möglich. Durch die Bereitstellung des wenigstens einen Fluids, insbesondere Wasserstoff, und/oder der Energie mittels der Fluid- und/oder Energiebereitstellungseinrichtung ergeben sich insbesondere hinsichtlich des Kohlenstoffdioxids Emissionsvorteile gegenüber herkömmlichen Anlagen. Die Kohlenstoffdioxidbilanz der Einrichtung ist daher bereits nach kurzer Zeit positiv, im Sinne einer Verringerung des ausgestoßenen Kohlenstoffdioxids.

Eine Weiterbildung der Erfindung sieht vor, dass die Tankanordnung eine erste Tankanordnung, der Speichertank ein erster Speichertank und das Fluid ein erstes Fluid ist, wobei zusätzlich zu der ersten Tankanordnung eine zweite Tankanordnung für ein zweites Fluid vorliegt, die mehrere separat angeordnete zweite Speichertanks aufweist, die in Umfangsrichtung um den Speicherturm verteilt angeordnet, zur Versteifung des Speicherturms an diesem befestigt sind und sich an der Gründung abstützen und/oder an dieser befestigt sind und/oder mehrfach an dem Speicherturm befestigt sind. Die Fluidspeichervorrichtung verfügt also nicht nur über die Tankanordnung, sondern vielmehr über mehrere Tankanordnungen für mehrere Fluide, nämlich über die erste Tankanordnung für das erste Fluid und die zweite Tankanordnung für das zweite Fluid. Die erste Tankanordnung ist zur Zwischenspeicherung des ersten Fluids und die zweite Tankanordnung zur Zwischenspeicherung des zweiten Fluids vorgesehen und ausgebildet. Das erste Fluid ist bevorzugt der Wasserstoff und das zweite Fluid der Sauerstoff. Auch eine umgekehrte Ausgestaltung könnte jedoch grundsätzlich realisiert sein.

Die erste Tankanordnung weist den ersten Speichertank auf, wie bereits erläutert, vorzugsweise genau einen ersten Speichertank. Das für das erste Fluid von der Fluidspeichervorrichtung insgesamt bereitgestellte Speichervolumen wird also allein mittels des einen ersten Speichertanks bereitgestellt. Die zweite Tankanordnung verfügt hingegen über mehrere separate zweite Speichertanks, sodass das von der Fluidspeichervorrichtung für das zweite Fluid bereitgestellte Speichervolumen von den mehreren zweiten Speichertanks gemeinsam bereitgestellt wird. Beispielsweise entspricht das Speichervolumen der Fluidspeichervorrichtung für das erste Fluid zumindest dem Speichervolumen für das zweite Fluid, bevorzugt ist jedoch das Speichervolumen für das erste Fluid größer als das Speichervolumen für das zweite Fluid. Besonders bevorzugt ist das Speichervolumen für das erste Fluid mindestens 50 %, mindestens 75 % oder mindestens 100 % größer als das Speichervolumen für das zweite Fluid. Beispielsweise entspricht das Verhältnis zwischen dem Speichervolumen für das erste Fluid und dem Speichervolumen für das zweite Fluid dem Volumenverhältnis zwischen dem bei der Elektrolyse anfallenden Wasserstoff und Sauerstoff.

Um die Steifigkeit des Speicherturms zu erhöhen, sind die mehreren zweiten Speichertanks um den Speicherturm verteilt angeordnet und an diesem befestigt. Beispielsweise sind die zweiten Speichertanks jeweils einerseits an dem Speicherturm und andererseits an der Gründung befestigt oder stützen sich zumindest an dieser ab. Durch das Abstützen der zweiten Speichertanks an der Gründung wird die Aufstandsfläche des Speicherturms auf der Gründung deutlich vergrößert. Sind zudem die zweiten Speichertanks an der Gründung befestigt, beispielsweise mittels einer Schraub- oder Bolzenverbindung, so ist eine verbesserte Standfestigkeit des Speicherturms realisiert. Alternativ oder zusätzlich kann es vorgesehen sein, dass die zweiten Speichertanks jeweils mehrfach an dem Speicherturm befestigt sind, insbesondere an voneinander beabstandeten Befestigungsstellen. Hierdurch wird eine deutliche Erhöhung der Steifigkeit des Speicherturms erzielt.

In jedem Fall kann die Befestigung der zweiten Speichertanks an dem Speicherturm stoffschlüssig und/oder formschlüssig erfolgen, beispielsweise durch eine Schweißverbindung und/oder mittels einer Schraub- oder Bolzenverbindung. Insbesondere sind an dem Speicherturm Befestigungsflansche angeschweißt, an welchen die zweiten Speichertanks mittels Schrauben oder Bolzen befestigt sind. Zusätzlich oder alternativ kann es vorgesehen sein, dass zumindest ein Teil der zweiten Speichertanks oder alle zweiten Speichertanks lösbar an dem Speicherturm befestigt sind, insbesondere zu Wartungs- und/oder Inspektionszwecken.

Es wurde bereits darauf hingewiesen, dass der erste Speichertank beispielsweise zur Aufnahme des ersten Fluids unter einem Druck von mindestens 100 bar, mindestens 150 bar, mindestens 200 bar, mindestens 250 bar oder mindestens 300 bar ausgebildet ist. Die zweiten Speichertanks sind vorzugsweise derart ausgebildet, dass sie zur Aufnahme des zweiten Fluids bei demselben Druck geeignet sind. In anderen Worten sollen der erste Speichertank und die zweiten Speichertanks derart ausgestaltet sein, dass das jeweilige Fluid in ihnen mit demselben maximalen Druck vorliegen kann. Insbesondere sind der erste Speichertank und der zweite Speichertank druckfest bis hin zu den genannten Drücken.

Um trotz der vorstehend beschriebenen Abmessungen des Speicherturms in axialer Richtung eine hinreichende Festigkeit des Speicherturms bei gleichzeitig begrenzter Materialstärke des Speicherturms zu erzielen, sind die zweiten Speichertanks zur Versteifung des Speicherturms an diesem befestigt. Bevorzugt sind die zweiten Speichertanks gleichmäßig in Umfangsrichtung verteilt um den Speicherturm angeordnet. Beispielsweise sind wenigstens vier, wenigstens sechs, wenigstens acht oder wenigstens zehn zweite Speichertanks vorgesehen. Die zweiten Speichertanks sind bevorzugt derart an dem Speicherturm angeordnet, dass sie in Umfangsrichtung voneinander beabstandet angeordnet sind, also einander nicht berühren. Mit einer derartigen Ausgestaltung wird eine besonders gute Stützwirkung der zweiten Speichertanks auf den Speicherturm bewirkt.

Die zweiten Speichertanks weisen in axialer Richtung bezüglich der Längsmittelachse des Speicherturms eine Erstreckung auf, welche höchstens 50 %, höchstens 40 %, höchstens 30 %, höchstens 25 % oder höchstens 20 % der Abmessungen des Speicherturms in dieser Richtung entspricht. Zusätzlich oder alternativ beträgt die Erstreckung der zweiten Speichertanks in axialer Richtung mindestes 10 %, mindestens 20 %, mindestens 30 %, mindestens 40 % oder mindestens 50 % der Abmessungen des Speicherturms in dieser Richtung. Beispielsweise beträgt die Erstreckung der zweiten Speichertanks in axialer Richtung also mindestens 10 % und höchstens 50 %, mindestens 20 % und höchstens 40 % oder mindestens 30 % und höchstens 40 % der Abmessungen des Speicherturms in dieser Richtung.

Bevorzugt sind die zweiten Speichertanks im Querschnitt gesehen analog zu dem ersten Speichertank beziehungsweise dem Speicherturm zylindrisch, insbesondere kreiszylindrisch. Besonders bevorzugt sind die zweiten Speichertanks jeweils wenigstens einseitig, insbesondere beidseitig, mit einem kugelkalottenförmigen Deckel beziehungsweise Endstück verschlossen. Hierdurch wird eine hohe Druckfestigkeit der zweiten Speichertanks realisiert. Auch der erste Speichertank kann in axialer Richtung gesehen wenigstens einseitig, bevorzugt beidseitig, mit einem derartigen kugelkalottenförmigen Deckel beziehungsweise Endstück verschlossen sein.

Eine Weiterbildung der Erfindung sieht vor, dass die erste Tankanordnung in axialer Richtung vollständig auf der der Gründung abgewandten Seite der zweiten Tankanordnung vorliegt. Entsprechend liegt im Längsschnitt gesehen keine Überlappung zwischen der ersten Tankanordnung und der zweiten Tankanordnung vor. Vielmehr grenzen sie allenfalls unmittelbar aneinander an. Besonders bevorzugt sind sie jedoch in axialer Richtung voneinander beabstandet. Beispielsweise beträgt der Abstand zwischen der ersten Tankanordnung und der zweiten Tankanordnung in axialer Richtung mindestens 25 %, mindestens 50 %, mindestens 75 % oder mindestens 100 % der maximalen Abmessungen des Speicherturms in radialer Richtung. Zusätzlich oder alternativ kann der Abstand höchstens 200 %, höchstens 175 %, höchstens 150 %, höchstens 125 % oder höchstens 100 % der maximalen Abmessungen in radialer Richtung betragen.

Die beschriebene Anordnung der ersten Tankanordnung und der zweiten Tankanordnung zueinander hat den Vorteil einer weiter verbesserten Steifigkeit des Speicherturms. Ist an dem Speicherturm die Traganordnung für die Solarnutzungseinrichtung angeordnet, so ist es besonders bevorzugt vorgesehen, dass die erste Tankanordnung in axialer Richtung gesehen vollständig auf der der Gründung abgewandten Seite der Traganordnung und die zweite Tankanordnung in axialer Richtung gesehen vollständig auf der der Gründung zugewandten Seite der Traganordnung angeordnet ist. In anderen Worten liegt die Traganordnung in axialer Richtung gesehen zwischen der ersten Tankanordnung und der zweiten Tankanordnung vor. Unter der Traganordnung ist hierbei insbesondere lediglich ein unmittelbar an dem Speicherturm angreifender Teil der Traganordnung zu verstehen, beispielsweise ein den Speicherturm in Umfangsrichtung vollständig umgreifender Tragring der Traganordnung. Eine solche Ausgestaltung ist hinsichtlich der Steifigkeit des Speicherturms besonders vorteilhaft.

Eine Weiterbildung der Erfindung sieht vor, dass die zweiten Speichertanks jeweils an mehreren diskreten Befestigungsstellen oder in axialer Richtung durchgehend an dem Speicherturm befestigt sind. Die Befestigungsstellen sind voneinander beabstandet angeordnet, insbesondere in axialer Richtung. Vorzugsweise liegt zumindest ein Teil der Befestigungsstellen oder liegen alle Befestigungsstellen in der der Gründung abgewandten Hälfte des jeweiligen zweiten Speichertanks vor. Auf diese Art und Weise kann eine besonders zuverlässige und stabile Anbindung an den Speicherturm realisiert werden.

Es kann jedoch auch vorgesehen sein, dass die Befestigungsstellen gleichmäßig in axialer Richtung über einen Großteil des zweiten Speichertanks und des ganzen zweiten Speichertanks verteilt an dem jeweiligen zweiten Speichertank angeordnet sind. Beispielsweise ist eine der Befestigungsstellen an einem ersten Ende des zweiten Speichertanks und eine andere der Befestigungsstellen an einem dem ersten Ende gegenüberliegenden zweiten Ende des zweiten Speichertanks angeordnet. Bezogen auf eine axiale Erstreckung des zweiten Speichertanks ist die eine der Befestigungsstellen beispielsweise höchstens 25 % von einem der Enden des zweiten Speichertanks entfernt angeordnet, die andere der Befestigungsstellen jedoch mindestens 75 % von demselben Ende.

Alternativ kann die Befestigung der zweiten Speichertanks an dem Speicherturm durchgehend ausgebildet sein, also sich über die gesamte Längserstreckung des zweiten Speichertanks oder zumindest einen Großteil der Längserstreckung des zweiten Speichertanks erstrecken. Das Befestigen der zweiten Speichertanks an dem Speicherturm, entweder an den diskreten Befestigungsstellen oder durchgehend, erfolgt besonders bevorzugt mittels einer Stoffschlussverbindung, beispielsweise durch Schweißen oder dergleichen. Die beschriebene Ausgestaltung ermöglicht eine besonders effektive Versteifung des Speicherturms.

Eine Weiterbildung der Erfindung sieht vor, dass von dem Speicherturm beabstandet weitere zweite Speichertanks angeordnet sind, die an den zweiten Speichertanks befestigt sind. Zusätzlich zu den zweiten Speichertanks liegen also weitere zweite Speichertanks vor. Diese sind jedoch in radialer Richtung von dem Speicherturm beabstandet angeordnet, berühren diesen also nicht. Die weiteren zweiten Speichertanks sind an den zweiten Speichertanks befestigt. Beispielsweise ist jeder der weiteren zweiten Speichertanks einerseits an einem der zweiten Speichertanks und andererseits an einem anderen der zweiten Speichertanks befestigt, sodass die zweiten Speichertanks über den weiteren zweiten Speichertank miteinander verbunden, insbesondere aneinander befestigt sind.

Das Befestigen der weiteren zweiten Speichertanks an den zweiten Speichertanks erfolgt beispielsweise stoffschlüssig, insbesondere durch Schweißen, oder formschlüssig, beispielsweise mittels einer Bolzen- und/oder Schraubverbindung. Die weiteren zweiten Speichertanks können in axialer Richtung von der Gründung beabstandet angeordnet sein oder alternativ sich an der Gründung abstützen und/oder an dieser befestigt sein. In jedem Fall wird mittels der weiteren zweiten Speichertanks eine weitere Versteifung der Gesamtanordnung aus Speicherturm und zweiten Speichertanks sowie eine vorteilhafte Gewichtsverteilung erzielt.

Eine Weiterbildung der Erfindung sieht vor, dass die Gründung wenigstens eine Bodenplatte aufweist, die in radialer Richtung größere Abmessungen aufweist als der Speicherturm. Die Bodenplatte dient der Abstützung des Speicherturms auf dem Untergrund beziehungsweise dem Fundament. Die Bodenplatte liegt hierzu auf dem Untergrund und/oder dem Fundament der Gründung auf. Sie wird von dem Speicherturm in axialer Richtung durchgriffen, wohingegen die zweiten Speichertanks vorzugsweise an der Bodenplatte anliegen. Es kann auch vorgesehen sein, dass die zweiten Speichertanks von der Bodenplatte endseitig verschlossen sind. Die Bodenplatte besteht bevorzugt wenigstens bereichsweise oder sogar vollständig aus Metall. Falls die Bodenplatte dem endseitigen Verschließen der zweiten Speichertanks dient, besteht sie vorzugsweise aus demselben Material wie die zweiten Speichertanks. Die Bodenplatte ist beispielsweise mittels einer formschlüssigen Verbindung, beispielsweise einer Schraubverbindung, an dem Fundament der Gründung befestigt.

Eine Weiterbildung der Erfindung sieht vor, dass der Speicherturm die Bodenplatte durchgreift, sodass auf einer ersten Seite der Bodenplatte ein erster Teil des Speicherturms und auf einer der ersten Seite gegenüberliegenden zweiten Seite der Bodenplatte ein zweiter Teil des Speicherturms vorliegt, wobei die zweiten Speichertanks an dem ersten Teil des Speicherturms befestigt sind und/oder der zweite Teil des Speicherturms eine als Mannloch ausgebildete Zugangsöffnung, insbesondere für den ersten Speichertank, aufweist. In anderen Worten liegt der Speicherturm in axialer Richtung gesehen beiderseits der Bodenplatte vor, sodass er von der Bodenplatte in den ersten Teil und den zweiten Teil aufgeteilt ist. Der erste Teil ist auf der dem Untergrund abgewandten Seite der Bodenplatte angeordnet, wohingegen der zweite Teil ausgehend von der Bodenplatte in den Untergrund eingreift.

Die zweiten Speichertanks sind an dem ersten Teil des Speicherturms befestigt, um diesen zu versteifen. In dem zweiten Teil des Speicherturms ist zusätzlich oder alternativ die Zugangsöffnung ausgebildet, welche als Mannloch ausgebildet ist. Entsprechend ermöglicht die Zugangsöffnung ein Einsteigen einer Person in den Speicherturm, insbesondere unterhalb des ersten Speichertanks. Beispielsweise mündet die Zugangsöffnung in einen in dem Speicherturm vorliegenden Raum ein, an welchen der erste Speichertank angrenzt. Die Zugangsöffnung weist für das Einsteigen der Person geeignete Abmessungen auf.

Die Gründung, insbesondere das Fundament, ist derart ausgestaltet, dass die Zugangsöffnung zugänglich ist. Beispielsweise umgreift die Gründung, insbesondere das Fundament, den zweiten Teil des Speicherturms, ist jedoch in radialer Richtung von diesem beabstandet. Entsprechend ist in der Gründung beziehungsweise dem Fundament eine Ausnehmung ausgebildet, in die der Speicherturm hineinragt und insbesondere durchgreift. Beispielsweise ist die Ausnehmung in axialer Richtung gesehen einerseits von dem Fundament der Gründung und andererseits von der Bodenplatte der Gründung begrenzt, welche die Ausnehmung vollständig übergreift und verschließt. Es kann vorgesehen sein, dass sich der Speicherturm in axialer Richtung auf dem Fundament unmittelbar abstützt. Es kann jedoch auch vorgesehen sein, dass das Abstützen des Speicherturms an dem Fundament lediglich mittelbar erfolgt, nämlich beispielsweise über die Bodenplatte. Mit einer derartigen Ausgestaltung wird eine besonders gute Wartbarkeit bei gleichzeitig hoher Stabilität des Speicherturms realisiert.

Eine Weiterbildung der Erfindung sieht vor, dass ein Fundament der Gründung als Wanne ausgestaltet ist und einen Innenbereich aufweist, in dem der Speicherturm angeordnet ist, wobei ein den Innenbereich umgreifender Außenbereich in axialer Richtung gegenüber dem Innenbereich in die der ersten Tankanordnung zugewandte Richtung versetzt ist. Über das Fundament stützt sich der Speicherturm an dem Untergrund ab. Das Fundament ist Bestandteil der Gründung, insbesondere mit der Bodenplatte zusammen. Besonders bevorzugt stützt sich der Speicherturm über die Bodenplatte an dem Fundament und über das Fundament an dem Untergrund ab. Der Speicherturm ist insoweit mittels des Fundaments in dem Untergrund verankert. Hierzu greift das Fundament bevorzugt in den Untergrund ein.

Das Fundament weist mindestens zwei unterschiedliche Bereiche, nämlich den Innenbereich und den Außenbereich auf. An dem Innenbereich stützt sich der Speicherturm ab, wohingegen der Außenbereich nicht unmittelbar mit dem Speicherturm in Verbindung steht. Vorzugsweise ist der Außenbereich ausschließlich über den Innenbereich mit dem Speicherturm verbunden. Sowohl der Innenbereich als auch der Außenbereich sind bevorzugt rund oder mehreckig, insbesondere rechteckig. Hierbei umgreift der Außenbereich den Innenbereich vorzugsweise ringförmig. Beispielsweise sind der Innenbereich und der Außenbereich koaxial zueinander angeordnet, insbesondere zusätzlich koaxial zu dem Speicherturm.

Der Innenbereich weist beispielsweise in radialer Richtung Abmessungen auf, welche um einen Faktor von mindestens 5, mindestens 7,5, mindestens 10, mindestens 12,5 oder mindestens 15 größer sind als die maximalen Abmessungen des Speicherturms in radialer Richtung. Zusätzlich oder alternativ entsprechen die Abmessungen höchstens den maximalen Abmessungen in radialer Richtung multipliziert mit einem Faktor von maximal 20, maximal 17,5 oder maximal 15. Der Innenbereich und der Außenbereich sind in jedem Fall einstückig und materialeinheitlich ausgestaltet. Besonders bevorzugt bestehen sie durchgehend aus Beton, insbesondere aus bewehrtem Beton.

Der Innenbereich und der Außenbereich, insbesondere ihre dem Speicherturm zugewandten Oberflächen, sind in axialer Richtung gegeneinander versetzt. Der Versatz ist derart gewählt, dass das Fundament nach Art einer Wanne ausgestaltet ist. Hierzu ist der Innenbereich beziehungsweise seine Oberfläche gegenüber dem Außenbereich beziehungsweise seiner Oberfläche in die von der ersten Tankanordnung abgewandte Richtung versetzt. Im Längsschnitt gesehen umgreift also der Außenbereich den über den Innenbereich überstehenden Teil des Speicherturms in Umfangsrichtung zumindest teilweise, zumindest durchgehend. Hierdurch kann die Höhe des Speicherturms gegenüber dem Untergrund verringert werden, sodass sich genehmigungsrechtliche Vorteile ergeben können. Besonders bevorzugt ist es vorgesehen, dass eine Nabenhöhe der Windkraftanlage bezüglich des Außenbereichs höchstens 30 m, höchstens 27,5 m oder höchstens 25 m beträgt.

Die Ausgestaltung der Fluid- und/oder Energiebereitstellungsrichtung, gemäß welcher das Fundament der Gründung als Wanne ausgestaltet ist und den Innenbereich aufweist, in dem der Speicherturm angeordnet ist, wobei der den Innenbereich umgreifende Außenbereich in axialer Richtung gegenüber dem Innenbereich in die der ersten Tankanordnung zugewandte Richtung versetzt ist, kann zusätzlich oder alternativ zu der Beabstandung der (ersten) Tankanordnung von der Gründung vorgesehen sein.

Die Erfindung ist entsprechend auch auf eine Fluid- und/oder Energiebereitstellungseinrichtung gerichtet, mit einer Solarnutzungseinrichtung und/oder einer Windkraftanlage sowie mit einer Fluidspeichereinrichtung, wobei die Fluid- und/oder Energiebereitstellungseinrichtung dazu ausgebildet ist, mittels von der Solarnutzungseinrichtung und/oder von der Windkraftanlage bereitgestellter Energie Wasser durch Elektrolyse in wenigstens ein Fluid aufzuspalten und das Fluid mittels der Fluidspeichervorrichtung zwischenzuspeichern, wobei die Fluidspeichervorrichtung über eine Tankanordnung für das Fluid verfügt, die einen Speichertank in einem mittels einer Gründung verankerten, sich in axialer Richtung bezüglich seiner Längsmittelachse in die Gründung hinein erstreckenden Speicherturm aufweist.

Diese Fluid- und/oder Energiebereitstellungseinrichtung zeichnet sich dadurch aus, dass ein Fundament der Gründung als Wanne ausgestaltet ist und den Innenbereich aufweist, in dem der Speicherturm angeordnet ist, wobei der den Innenbereich umgreifende Außenbereich in axialer Richtung gegenüber dem Innenbereich in die der ersten Tankanordnung zugewandte Richtung versetzt ist. Hinsichtlich der Vorteile und möglicher vorteilhafter Ausgestaltungen wird auf die weiteren Ausführungen im Rahmen dieser Beschreibung verwiesen.

Eine Weiterbildung der Erfindung sieht vor, dass die von dem Fundament ausgebildete Wanne ein Fluidreservoir bildet. Das Fluidreservoir dient der Zwischenspeicherung eines Fluids, beispielsweise von Wasser. Das Wasser wird bevorzugt für die Elektrolyse herangezogen. Hierzu ist das Fluidreservoir strömungstechnisch an eine Elektrolyseeinrichtung zur Durchführung der Elektrolyse angeschlossen. Das Fluidreservoir weist ein Speichervolumen auf, welches bevorzugt mindestens 10 m³, mindestens 25 m³, mindestens 50 m³ oder mindestens 100 m³ beträgt.

Beispielsweise beträgt eine Tiefe des Fluidreservoirs mindestens 1 m, mindestens 2,5 m, mindestens 5 m, mindestens 7,5 m oder mindestens 10 m.

Eine Weiterbildung der Erfindung sieht vor, dass die von dem Fundament ausgebildete Wanne von einer Abdeckung verschlossen ist. Die Abdeckung wird insbesondere durch den Speicherturm durchgriffen. Der Speicherturm ragt also aus der Wanne durch die Abdeckung hindurch heraus. Die Abdeckung weist wenigstens eine Fluiddurchtrittsöffnung auf, durch welche ein Fluid, insbesondere Wasser, in das Fluidreservoir eintreten kann. Das Wasser ist zum Beispiel Regenwasser. Das Fluidreservoir kann insoweit auch als Wasserreservoir oder als Regenwasserreservoir bezeichnet werden. Die Fluiddurchtrittsöffnung ist beispielsweise von einer Perforierung der Abdeckung gebildet, sodass insoweit eine Vielzahl von Fluiddurchtrittsöffnungen vorliegt. Hierdurch wird eine besonders effektive Versorgung der Fluid- und/oder Energiebereitstellungseinrichtung mit Wasser realisiert, weil Wasser, insbesondere Regenwasser, aus der Außenumgebung aufgefangen und zur Elektrolyse herangezogen wird. In jedem Fall ist die Abdeckung derart ausgestaltet, dass eine Verschmutzung des Fluidreservoirs beziehungsweise des in diesem befindlichen Fluids effektiv verhindert oder zumindest verringert wird.

Eine Weiterbildung der Erfindung sieht vor, dass in einer strömungstechnischen Verbindung zwischen dem Fluidreservoir und der Elektrolyseeinrichtung eine Fluidaufbereitungseinrichtung vorliegt. Die Fluidaufbereitungseinrichtung dient einem Aufbereiten der Fluids, insbesondere nach seinem Entnehmen aus dem Fluidreservoir und vor seinem Zuführen zu der Elektrolyseeinrichtung. Die Fluidaufbereitungseinrichtung dient zum Beispiel einem Filtern des Fluids. Bevorzugt ionisiert die Fluidaufbereitungseinrichtung das Fluid und verfügt hierzu über einen Ionisator.

Eine Weiterbildung der Erfindung sieht vor, dass ein Versatz zwischen dem Innenbereich und dem Außenbereich in axialer Richtung mindestens den maximalen Abmessungen des Speicherturms in radialer Richtung entspricht. Je größter die Abmessungen des Speicherturms in radialer Richtung bezüglich seiner Längsmittelachse sind, umso auffälliger ist er. Aus diesem Grund ist es sinnvoll, seinen über den Außenbereich überstehenden Teil umso deutlicher zu begrenzen, je größer die Abmessungen in radialer Richtung sind. Vorzugsweise ist der Versatz um einen Faktor von mindestens 1,5, mindestens 2, mindestens 2,5, mindestens 3, mindestens 4 oder mindestens 5 größer als die maximalen Abmessungen des Speicherturms in radialer Richtung. Hierdurch werden zum einen optische Vorteile erzielt und zum anderen sind hinsichtlich der baurechtlichen Genehmigung Vorteile zu erwarten. Weiterhin wird das optionale Fluidreservoir mit einem hinreichenden Volumen ausgestattet.

Eine Weiterbildung der Erfindung sieht vor, dass der Innenbereich in einer ersten gedachten Ebene und der Außenbereich in einer zweiten gedachten Ebene liegt, wobei der Innenbereich und der Außenbereich in radialer Richtung über einen Übergangsbereich miteinander verbunden sind. Der Innenbereich und der Außenbereich liegen bevorzugt jeweils vollständig in der entsprechenden Ebene. Die beiden Ebenen sind parallel beabstandet voneinander angeordnet, um den Versatz zwischen dem Innenbereich und dem Außenbereich zu realisieren. In radialer Richtung sind der Innenbereich und der Außenbereich voneinander beabstandet angeordnet; zwischen ihnen ist der Übergangsbereich ausgebildet.

Der Übergangsbereich ist vorzugsweise mit dem Innenbereich und dem Außenbereich einstückig und materialeinheitlich ausgestaltet. Besonders bevorzugt besteht er somit ebenfalls aus Beton. Der Innenbereich, der Übergangsbereich und der Außenbereich bilden gemeinsam das Fundament der Gründung. Der Übergangsbereich weist in radialer Richtung Abmessungen auf, welche mindestens den maximalen Abmessungen des Speicherturms in radialer Richtung entsprechen, bevorzugt jedoch um einen Faktor von wenigstens 1,5, wenigstens 2, wenigstens 2,5, wenigstens 3, wenigstens 4 oder wenigstens 5 größer sind.

Bevorzugt liegt eine dem Speicherturm zugewandte Oberfläche des Übergangsbereichs in einer gedachten Ebene. Die gedachte Oberfläche ist vorzugsweise gegenüber der Längsmittelachse des Speicherturms angewinkelt, schließt mit dieser also einen Winkel ein, welcher größer als 0° und kleiner als 180° ist. Besonders bevorzugt beträgt der Winkel mindestens 30° und höchstens 60°, wenigstens 35° und höchstens 55°, wenigstens 40° und höchstens 50° oder in etwa oder genau 45°. Eine derartige Ausgestaltung des Übergangsbereichs ermöglicht einen Lichteinfall von Sonnenlicht bis hin zu der tieferliegenden Oberfläche des Innenbereichs.

Eine Weiterbildung der Erfindung sieht vor, dass die Solarnutzungseinrichtung wenigstens einen Solarkollektor und/oder ein Solarmodul aufweist, das mittels einer Schwenkeinrichtung um wenigstens eine Schwenkachse bezüglich des Speicherturms schwenkbar ist. Die Schwenkeinrichtung ermöglicht das Schwenken um die wenigstens eine Schwenkachse, vorzugsweise um mehrere verschiedene Schwenkachsen. Die Schwenkachse kann beispielsweise parallel zu der Längsmittelachse des Speicherturms verlaufen oder sogar mit dieser zusammenfallen. Alternativ kann die Schwenkachse senkrecht auf einer die Längsmittelachse des Speicherturms aufnehmenden Ebene stehen. Letzteres dient der Realisierung einer Azimutführung des Solarkollektors beziehungsweise des Solarmoduls.

Besonders bevorzugt kann das Verschwenken mittels der Schwenkeinrichtung um beide der genannten Schwenkachsen durchgeführt werden, um den Solarkollektor und/oder das Solarmodul zuverlässig zu der Sonne ausrichten zu können, insbesondere unter einem bestimmten Winkel. Hierdurch wird eine besonders hohe Effizienz erzielt. Beispielsweise werden der Solarkollektor und/oder das Solarmodul senkrecht zur Sonne ausgerichtet, sodass also eine Normalenrichtung des Solarkollektors und/oder des Solarmoduls zur Sonne weist.

Eine Weiterbildung der Erfindung sieht vor, dass der Solarkollektor und/oder das Solarmodul in zumindest einer Stellung in die Wanne eingreifen, oder dass in der zumindest einen Stellung ein Abstand in axialer Richtung zwischen dem Solarkollektor und/oder dem Solarmodul einerseits und dem Außenbereich andererseits höchstens den maximalen Abmessungen des Speicherturms in radialer Richtung entspricht. Die Wanne ist von dem Innenbereich und dem Außenbereich sowie - optional - dem Übergangsbereich gebildet. Der Solarkollektor beziehungsweise das Solarmodul sind in unterschiedlichen Stellungen anordenbar. Beispielsweise sind sie, wie bereits erläutert, um eine Schwenkachse verschwenkbar, welche bezüglich der Längsmittelachse des Speicherturms angewinkelt ist, beispielsweise mit dieser einen Winkel einschließt, welcher mindestens 60° und höchstens 120°, mindestens 70° und höchstens 110°, mindestens 80° und höchstens 100° oder in etwa oder genau 90° beträgt.

Der Solarkollektor beziehungsweise das Solarmodul sind beispielsweise derart verschwenkbar, dass sie in unterschiedlichen Schwenkstellungen unterschiedliche Abstände zu der Gründung aufweisen. In wenigstens einer ihrer Stellungen, insbesondere in derjenigen Stellung, in welcher sie den geringsten Abstand zu der Gründung beziehungsweise dem Fundament aufweisen, greifen sie nun in die Wanne ein, sodass im Längsschnitt gesehen der Außenbereich den Solarkollektor beziehungsweise das Solarmodul umgreift, also in axialer Richtung mit ihm in Überdeckung vorliegt.

Alternativ ist der Solarkollektor beziehungsweise das Solarmodul in der genannten Stellung in axialer Richtung von dem Außenbereich beabstandet. Der Abstand beträgt jedoch höchstens den maximalen Abmessungen des Speicherturms in radialer Richtung. Der Abstand kann zwar auch größer sein, entspricht jedoch bevorzugt höchstens den maximalen Abmessungen in radialer Richtung multipliziert mit einem Faktor von höchstens 5, höchstens 4, höchstens 3 oder höchstens 2. Hierdurch wird eine besonders geringe Bauhöhe der Fluid- und/oder Energiebereitstellungseinrichtung sichergestellt. Gleichzeitig wird eine Sonneneinstrahlung auf den Solarkollektor beziehungsweise das Solarmodul ermöglicht.

Eine Weiterbildung der Erfindung sieht vor, dass an dem Speicherturm eine den Speicherturm zumindest bereichsweise umgreifende Traganordnung für die Solarnutzungseinrichtung und/oder eine Stützanordnung für die Windkraftanlage ausgebildet sind. Die Traganordnung umgreift den Speicherturm beispielsweise nach Art einer Manschette. Vorzugsweise sind über die Traganordnung wenigstens zwei Paneele für die Anordnung von Solarkollektoren und/oder Solarmodulen an dem Speicherturm befestigt. Somit kann eine große effektive Fläche zur Nutzung der solaren Energie bereitgestellt werden. Zusätzlich oder alternativ zu der Traganordnung ist die Stützanordnung vorgesehen. Diese dient der Abstützung beziehungsweise Befestigung der Windkraftanlage an dem Speicherturm. Beispielsweise ist die Stützanordnung an einem konisch ausgebildeten Abschlusselement des Speicherturms angeordnet beziehungsweise befestigt. Hierdurch wird ein sehr hoher Integrationsgrad der Fluid- und/oder Energiebereitstellungseinrichtung erzielt.

Eine Weiterbildung der Erfindung sieht vor, dass die erste Tankanordnung in axialer Richtung vollständig auf der der Traganordnung abgewandten Seite der Gründung angeordnet ist, und/oder dass die erste Tankanordnung von der Traganordnung in axialer Richtung einen Abstand aufweist, der mindestens den maximalen Abmessungen des Speicherturms entspricht. In axialer Richtung gesehen liegt also die Traganordnung zwischen der ersten Tankanordnung und der Gründung vor. Beispielsweise schließen die erste Tankanordnung und die Traganordnung in axialer Richtung gesehen unmittelbar aneinander an.

Bevorzugt ist es jedoch vorgesehen, dass die erste Tankanordnung und die Traganordnung voneinander beabstandet sind. Hierbei beträgt der Abstand mindestens den maximalen Abmessungen des Speicherturms in radialer Richtung, ist bevorzugt jedoch größer. Beispielsweise entspricht der Abstand mindestens den maximalen Abmessungen in radialer Richtung multipliziert mit einem Faktor von mindestens 2, mindestens 3, mindestens 4 oder mindestens 5. Hierdurch wird eine besonders hohe Standfestigkeit des Speicherturms erzielt.

Eine Weiterbildung der Erfindung sieht vor, dass in dem Speicherturm ein zu dem ersten Speichertank koaxial angeordneter dritter Speichertank für ein drittes Fluid angeordnet ist. Der dritte Speichertank ist vorzugsweise in axialer Richtung gesehen auf der dem Untergrund beziehungsweise der Bodenplatte abgewandten Seite des ersten Speichertanks angeordnet. Beispielsweise schließt sich der dritte Speichertank unmittelbar an den ersten Speichertank an und ist lediglich über eine Trennwand von diesem strömungstechnisch getrennt. Der dritte Speichertank ist besonders bevorzugt zur drucklosen Zwischenspeicherung des dritten Fluids vorgesehen und ausgebildet. Das dritte Fluid ist beispielsweise Wasser, welches im Rahmen der vorstehend bereits erwähnten Elektrolyse in das wenigstens eine Fluid, insbesondere Wasserstoff und Sauerstoff, aufgespaltet wird. Das Vorsehen des dritten Speichertanks ermöglicht ein besonders autarkes Betreiben der Fluid- und/oder Energiebereitstellungseinrichtung.

Der dritte Speichertank kann zusätzlich oder alternativ zu dem Fluidreservoir vorliegen. In ersterem Fall sind beispielsweise der dritte Speichertank und das Fluidreservoir beide an die Elektrolyseeinrichtung strömungstechnisch angeschlossen. Hierbei kann ein strömungstechnisch paralleler Anschluss realisiert sein. Besonders bevorzugt ist jedoch das Fluidreservoir strömungstechnisch über den dritten Speichertank an die Elektrolyseeinrichtung angeschlossen. In diesem Fall dient zum Beispiel der dritte Speichertank einer Bevorratung von aufbereitetem Wasser aus dem Fluidreservoir, welches nachfolgend der Elektrolyseeinrichtung zugeführt wird. Die Aufbereitung umfasst insbesondere eine Filterung und/oder eine Ionisierung.

Eine Weiterbildung der Erfindung sieht vor, dass der dritte Speichertank in einem zumindest bereichsweise konisch ausgebildeten Abschlusselement des Speicherturms angeordnet ist. Das Abschlusselement dient beispielsweise als Endkappe des Speicherturms. Es kann vorgesehen sein, dass über das Abschlusselement die vorstehend bereits erwähnte Windkraftanlage an dem Speicherturm befestigt ist. Die konische Ausgestaltung des Abschlusselements ermöglicht eine besonders stabile Anbindung der Windkraftanlage an den Speicherturm und stellt gleichzeitig eine hohe Steifigkeit des Speicherturms sicher.

Eine Weiterbildung der Erfindung sieht vor, dass das Abschlusselement über eine Flanschbefestigung an einem Grundkörper des Speicherturms befestigt ist, wobei zwischen dem Abschlusselement und dem Grundkörper eine den ersten Speichertank und den dritten Speichertank strömungstechnisch voneinander separierende Trennwand angeordnet ist. Zur Realisierung der Flanschbefestigung weist der Grundkörper beispielsweise einen ersten Anschlussflansch und das Abschlusselement einen zweiten Anschlussflansch auf. Diese beiden Anschlussflansche sind aneinander befestigt, insbesondere mittels einer Schraubverbindung.

Die Flanschbefestigung und mithin die Anschlussflansche dienen zusätzlich der Befestigung der Trennwand. Beispielsweise wird die Trennwand zwischen den beiden Anschlussflanschen angeordnet und über die zur Verbindung der Anschlussflansche verwendete Schraubverbindung mit dem Grundkörper einerseits und dem Abschlusselement andererseits verbunden. Die Trennwand kann beispielsweise kugelkalottenförmig sein und hierbei eine in den dritten Speichertank hineinragende Wölbung aufweisen. So wird eine besonders druckfeste Ausgestaltung des ersten Speichertanks realisiert.

Eine Weiterbildung der Erfindung sieht vor, dass ein mit dem ersten Speichertank strömungstechnisch verbundener erster Fluidanschluss, ein mit dem wenigstens einen zweiten Speichertank strömungstechnisch verbundener zweiter Fluidanschluss und ein mit dem dritten Speichertank strömungstechnisch verbundener dritter Fluidanschluss vorliegen, wobei der erste Fluidanschluss an dem Grundkörper und der dritte Fluidanschluss an dem Abschlusselement angeordnet sind. Die Fluidanschlüsse dienen dem Zuführen und Entnehmen des jeweiligen Fluids aus dem entsprechenden Speichertank. Durch die Anordnung des ersten Fluidanschlusses an dem Grundkörper und des dritten Fluidanschlusses an dem Abschlusselement wird eine direkte strömungstechnische Anbindung des jeweiligen Speichertanks ermöglicht. Zudem wird durch die Anordnung des dritten Fluidanschlusses an dem Abschlusselement und nicht an dem Grundkörper eine strukturelle Schwächung des ersten Speichertanks auf vorteilhafte Art und Weise vermieden.

Eine Weiterbildung der Erfindung sieht vor, dass der wenigstens eine Solarkollektor strömungstechnisch an ein solarthermisches Kraftwerk angeschlossen ist, das zur Bereitstellung elektrischer Energie aus von dem Solarkollektor bereitgestellter thermischer Energie ausgebildet ist. Das solarthermische Kraftwert ist beispielsweise gemäß der Druckschrift WO 2013/0567652 A1 ausgebildet, auf welche ausdrücklich Bezug genommen wird. Besonders bevorzugt ist das solarthermische Kraftwerk nach einem oder mehreren der Ansprüche der genannten Druckschrift ausgeführt.

Schließlich kann im Rahmen einer weiteren Ausführungsform der Erfindung vorgesehen sein, dass der wenigstens eine Solarkollektor strömungstechnisch an eine Energiespeichereinrichtung zur Zwischenspeicherung thermischer Energie angeschlossen ist. Die Energiespeichereinrichtung dient einer Zwischenspeicherung von mittels des Solarkollektors erwärmtem Fluid. Die Energiespeichereinrichtung ist besonders bevorzugt gemäß der Druckschrift WO 2016/000951 A1 ausgestaltet. Insbesondere weist die Energiespeichereinrichtung die Merkmale eines oder mehrerer der Ansprüche der genannten Druckschrift auf. Das Fluid der Energiespeichereinrichtung weist beispielsweise einen Druck von mindestens 50 bar, mindestens 75 bar, mindestens 90 bar oder mindestens 100 bar auf, wobei dieser Druck insbesondere bei einer Temperatur des Fluids von 300 °C vorliegt. Bevorzugt wird das Fluid auf einer Temperatur von mindestens 200 °C, mindestens 300 °C oder mindestens 400 °C gehalten.

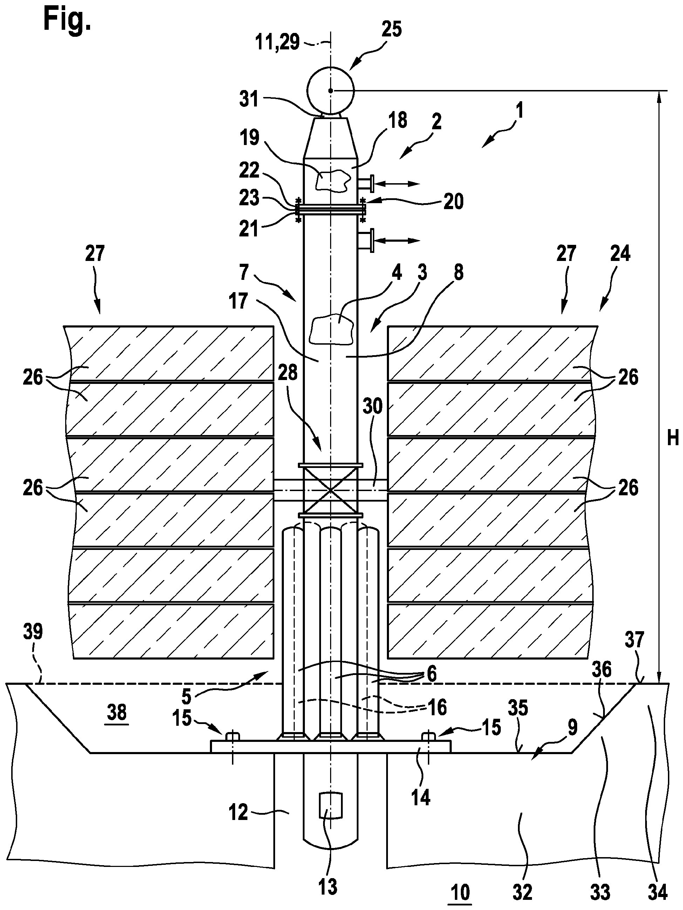

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Fluid- und/oder Energiebereitstellungseinrichtung mit einer Fluidspeichervorrichtung.

Die Figur zeigt eine schematische Darstellung einer Fluid- und/oder Energiebereitstellungseinrichtung 1, die eine Fluidspeichervorrichtung 2 aufweist. Diese verfügt wiederum über eine erste Tankanordnung 3 mit einem ersten Speichertank 4 sowie über eine - optionale - zweite Tankanordnung 5 mit ebenso optionalen mehreren zweiten Speichertanks 6. Der erste Speichertank 4 ist in einem Speicherturm 7 ausgebildet, welcher aus wenigstens einem zylindrischen, insbesondere kreiszylindrischen Rohr 8 zusammengesetzt ist. Der Speicherturm 7 ist mittels einer ein Fundament 9 aufweisenden Gründung in einem Untergrund 10 verankert. Der Speicherturm 7 ist hierbei derart ausgestaltet, dass er in die Gründung hineinragt. Bevorzugt ist das Fundament 9 in radialer Richtung bezüglich einer Längsmittelachse 11 des Speicherturms 7 von diesem beabstandet angeordnet, sodass eine Ausnehmung 12 in dem Fundament 9 vorliegt, in welche der Speicherturm 7 endseitig eingreift.

In die Ausnehmung 12 mündet eine Zugangsöffnung 13 des Speicherturms 7 ein, welche als Mannloch ausgestaltet ist und entsprechende Ausnehmungen aufweist. Die Ausnehmung 12 beziehungsweise das Fundament 9 wird von einer Bodenplatte 14 übergriffen, welche vorzugsweise mittels einer Schraubverbindung 15 an dem Fundament 9 befestigt ist, welche der Gründung zugeordnet ist. Der Speicherturm 7 ist vorzugsweise an der Bodenplatte 14 befestigt. Zusätzlich oder alternativ gilt dies für die zweiten Speichertanks 6. Diese stützen sich beispielsweise endseitig an der Bodenplatte 14 ab.

Die - rein optionalen - zweiten Speichertanks 6 sind um den Speicherturm 7 verteilt angeordnet und zu dessen Versteifung an ihm befestigt. Hierzu sind die zweiten Speichertanks 6 beispielsweise in axialer Richtung durchgehend an dem Speicherturm 7 befestigt, insbesondere durch Schweißen. An den zweiten Speichertanks 6 können wiederum weitere zweite Speichertanks 16 befestigt sein, vorzugsweise derart, dass sie beabstandet von dem Speicherturm 7 vorliegen. Das bedeutet, dass die weiteren zweiten Speichertanks 16 lediglich über die zweiten Speichertanks 6 an dem Speicherturm 7 angreifen. Die weiteren zweiten Speichertanks 16 sind optional. Der Speicherturm 7 weist einen Grundkörper 17 auf, an welchem die zweiten Speichertanks 6 befestigt sind und in welchem der erste Speichertank 4 ausgebildet ist. An dem Grundkörper 17 ist ein Abschlusselement 18 befestigt, welches wenigstens bereichsweise konisch ist. In dem Abschlusselement 18 ist ein dritter Speichertank 19 für ein drittes Fluid angeordnet beziehungsweise ausgebildet.

Der Grundkörper 17 und das Abschlusselement 18 sind über eine Flanschbefestigung 20 aneinander befestigt. Hierzu weist der Grundkörper 17 einen ersten Anschlussflansch 21 und das Abschlusselement 18 einen zweiten Anschlussflansch 22 auf. Die beiden Anschlussflansche 21 und 22 sind über eine Trennwand 23 miteinander verbunden, wobei die Trennwand 23 einerseits den ersten Speichertank 4 und andererseits den dritten Speichertank 19 begrenzt. Beispielsweise ist die Trennwand 23 gekrümmt, insbesondere kugelkalottenförmig gekrümmt, und ragt in den dritten Speichertank 19 hinein. Vor diesem Hintergrund ist der erste Speichertank 4 als Drucktank und der dritte Speichertank 19 als druckloser Tank ausgestaltet. Beispielsweise ist der erste Speichertank 4 druckfest bis mindestens 100 bar, mindestens 150 bar, mindestens 200 bar, mindestens 250 bar oder mindestens 300 bar. Das in dem dritten Speichertank 19 vorliegende dritte Fluid weist hingegen einen Druck auf, welcher einem Umgebungsdruck genau oder zumindest näherungsweise entspricht.

Zusätzlich zu der Fluidspeichervorrichtung 2 verfügt die Fluid- und/oder Energiebereitstellungseinrichtung 1 über eine Solarnutzungseinrichtung 24 sowie eine Windkraftanlage 25. Die Solarnutzungseinrichtung 24 weist wenigstens einen Solarkollektor 26, vorzugsweise eine Vielzahl von Solarkollektoren 26 auf. In dem hier dargestellten Ausführungsbeispiel sind lediglich einige Solarkollektoren 26 beispielhaft gekennzeichnet. Zusätzlich oder alternativ zu dem wenigstens einen Solarkollektor 26 kann wenigstens ein Solarmodul vorliegen. Die nachfolgenden Ausführungen hinsichtlich der Anordnung des Solarkollektors 26 sind für die Anordnung eines solchen Solarmoduls entsprechend heranziehbar.

Die Solarkollektoren 26 sind in dem hier dargestellten Ausführungsbeispiel an zwei Paneelen 27 befestigt, welche auf gegenüberliegenden Seiten des Speicherturms 7 angeordnet sind. Die Paneele 27 sind über eine Schwenkeinrichtung 28 um wenigstens eine Schwenkachse schwenkbar an dem Speicherturm 7 gelagert. In dem hier dargestellten Ausführungsbeispiel sind die Paneele 27 mittels der Schwenkeinrichtung 28 um mehrere verschiedene Schwenkachsen schwenkbar, nämlich um eine Schwenkachse 29, die der Längsmittelachse 11 des Speicherturms 7 entspricht, und um eine Schwenkachse 30, welche senkrecht auf einer die Schwenkachse 29 aufnehmenden Ebene steht. Das Verschwenken um die mehreren Schwenkachsen 29 und 30 ermöglicht ein präzises Ausrichten der Solarkollektoren 26 zur Sonne.

Die Windkraftanlage 25 ist mittels einer Stützanordnung 31 an dem Speicherturm 7 befestigt, insbesondere an dessen dem Fundament 9 abgewandten Seite. Vorzugsweise schließt sich die Stützanordnung 31 an das Abschlusselement 18 an, insbesondere ist sie über dieses an dem Grundkörper 17 des Speicherturms 7 befestigt. Die Fluidspeichervorrichtung 2 beziehungsweise ihr Speicherturm 7 dient insoweit nicht nur der Zwischenspeicherung von Fluiden, sondern zudem der Anordnung und Befestigung der Solarnutzungseinrichtung 24 sowie der Windkraftanlage 25. Selbstverständlich sind auch Ausführungsformen realisierbar, bei welchen die Solarnutzungseinrichtung 24 oder die Windkraftanlage 25 entfällt, sodass lediglich die jeweils andere Einrichtung beziehungsweise Anlage verbleibt.

Die beschriebene Fluid- und/oder Energiebereitstellungseinrichtung 1 hat den Vorteil, dass sie äußerst flexibel und zudem nahezu unterbrechungsfrei einsetzbar ist. Sie kann entweder zur Bereitstellung von Fluid, also beispielsweise Wasserstoff und/oder Sauerstoff, zur Bereitstellung von elektrischer Energie oder zur Bereitstellung von beiden verwendet werden. Mittels der Fluidspeichervorrichtung 2 wird zudem ein dauerhafter Betrieb sichergestellt. Liegt beispielsweise regenerative Energie vor, welche nicht zur Bereitstellung der elektrischen Energie verwendet wird, so kann diese zur Erzeugung von Wasserstoff und Sauerstoff aus Wasser aufgewandt werden. Der Wasserstoff und der Sauerstoff werden in der Fluidspeichervorrichtung 2 zwischengespeichert. Steht nicht hinreichend regenerative Energie zur Verfügung, um den Bedarf an elektrischer Energie zu decken, so können der Wasserstoff und der Sauerstoff aus der Fluidspeichervorrichtung 2 zur Bereitstellung von elektrischer Energie und/oder thermischer Energie beziehungsweise Wärme verwendet werden, nämlich indem sie einer hier nicht dargestellten Brennstoffzelle zugeführt werden.

In dem hier dargestellten Ausführungsbeispiel setzt sich das Fundament 9 aus mehreren Bereichen zusammen, nämlich einem Innenbereich 32, einem Übergangsbereich 33 und einem Außenbereich 34. Die genannten Bereiche 32, 33 und 34 weisen jeweils eine Oberfläche 35, 36 beziehungsweise 37 auf, welche jeweils auf der dem Untergrund 10 abgewandten Seite beziehungsweise auf der dem Speicherturm 7 zugewandten Seite vorliegt. Die Oberflächen 35, 36 und 37 liegen jeweils in einer gedachten Ebene, insbesondere vollständig. Die Oberflächen 35 und 37 sind hierbei parallel zueinander angeordnet, wohingegen die Oberfläche 36 gegenüber den Oberflächen 35 und 37 angewinkelt ist. Hierdurch ist das Fundament 9 als Wanne ausgestaltet und der Speicherturm 7 in Richtung des Untergrunds 10 gegenüber dem Außenbereich 34 versetzt. Der Versatz zwischen dem Innenbereich 32 und dem Außenbereich 34 beziehungsweise den entsprechenden Oberflächen 35 und 37 ist derart gewählt, dass eine Nabenhöhe H der Windkraftanlage 25 höchstens einer Höhe entspricht, welche ein vereinfachtes Genehmigungsverfahren möglich macht. Beispielsweise beträgt die Nabenhöhe H hierzu maximal 30 m, maximal 27,5 m oder maximal 25 m. Insgesamt wird hierdurch eine besonders kompakte Ausgestaltung der Fluid- und/oder Energiebereitstellungseinrichtung 1 realisiert.

Durch die Ausgestaltung des Fundaments 9 als Wanne liegt ein Fluidreservoir 38 zur Zwischenspeicherung eines Fluids vor. Das Fluidreservoir 38 ist zum Beispiel von einer Abdeckung 39 übergriffen, durch welche der Speicherturm 7 aus dem Fluidreservoir 38 herausragt. Die Abdeckung 39 ist beispielsweise perforiert, sodass Wasser, insbesondere Regenwasser, aus einer Au-ßenumgebung des Speicherturms 7 durch die Abdeckung 39 hindurch in das Fluidreservoir 38 gelangen kann. Das in dem Fluidreservoir 38 zwischengespeicherte Fluid wird zumindest zeitweise zum Betreiben der Fluid- und/oder Energiebereitstellungseinrichtung 1 herangezogen, insbesondere zur Durchführung der Elektrolyse. Das Fluid wird also zur Bereitstellung des ersten Fluid und/oder des zweiten Fluids, insbesondere des Wasserstoffs und/oder des Sauerstoffs, verwendet.

## Patentansprüche

1. Fluid- und/oder Energiebereitstellungseinrichtung (1), mit einer Solarnutzungseinrichtung (24) und/oder einer Windkraftanlage (25) sowie mit einer Fluidspeichervorrichtung (2), wobei die Fluid- und/oder Energiebereitstellungseinrichtung (1) dazu ausgebildet ist, mittels von der Solarnutzungseinrichtung (24) und/oder von der Windkraftanlage (25) bereitgestellter Energie Wasser durch Elektrolyse in wenigstens ein Fluid aufzuspalten und das Fluid mittels der Fluidspeichervorrichtung (2) zwischenzuspeichern, wobei die Fluidspeichervorrichtung (2) über eine Tankanordnung (3) für das Fluid verfügt, die einen Speichertank (4) in einem mittels einer Gründung verankerten, sich in axialer Richtung bezüglich seiner Längsmittelachse (11) in die Gründung hinein erstreckenden Speicherturm (7) aufweist und die in radialer Richtung nach außen unmittelbar von einer Wand des Speicherturms (7) begrenzt ist, **dadurch gekennzeichnet, dass** die Tankanordnung (3) in axialer Richtung bezüglich der Längsmittelachse (11) des Speicherturms (7) von der Gründung einen Abstand aufweist, der mindestens einem maximalen Durchmesser des Speicherturms (7) in radialer Richtung über seine gesamte Erstreckung in axialer Richtung entspricht, und ein in axialer Richtung zwischen der Tankanordnung (3) und der Gründung vorliegender Bereich des Speicherturms (7), der in radialer Richtung nach außen ebenfalls von der Wand des Speicherturms (7) begrenzt ist, mit Umgebungsluft gefüllt und zur Realisierung eines Druckausgleichs mit einer Außenumgebung des Speicherturms (7) strömungstechnisch verbunden ist.

2. Fluid- und/oder Energiebereitstellungseinrichtung nach Anspruch 1, **dadurch gekennzeichnet, dass** die Tankanordnung (3) eine erste Tankanordnung (3), der Speichertank (4) ein erster Speichertank (4) und das Fluid ein erstes Fluid ist, wobei zusätzlich zu der ersten Tankanordnung (3) eine zweite Tankanordnung (5) für ein zweites Fluid vorliegt, die mehrere separat angeordnete zweite Speichertanks (6) aufweist, die in Umfangsrichtung um den Speicherturm (7) verteilt angeordnet, zur Versteifung des Speicherturms (7) an diesem befestigt sind und sich an der Gründung abstützen und/oder an dieser befestigt sind und/oder mehrfach an dem Speicherturm (7) befestigt sind.

3. Fluid- und/oder Energiebereitstellungseinrichtung nach einem der vorhergehenden Ansprüche, **dadurch gekennzeichnet, dass** die erste Tankanordnung (3) in axialer Richtung vollständig auf der der Gründung abgewandten Seite der zweiten Tankanordnung (5) vorliegt.

4. Fluid- und/oder Energiebereitstellungseinrichtung nach einem der vorhergehenden Ansprüche, **dadurch gekennzeichnet, dass** die zweiten Speichertanks (6) jeweils an mehreren diskreten Befestigungsstellen oder in axialer Richtung durchgehend an dem Speicherturm (7) befestigt sind.

5. Fluid- und/oder Energiebereitstellungseinrichtung nach einem der vorhergehenden Ansprüche, **dadurch gekennzeichnet, dass** von dem Speicherturm (7) beabstandet weitere zweite Speichertanks (16) angeordnet sind, die an den zweiten Speichertanks (6) befestigt sind.

6. Fluid- und/oder Energiebereitstellungseinrichtung nach einem der vorhergehenden Ansprüche, **dadurch gekennzeichnet, dass** die Gründung eine Bodenplatte (14) aufweist, die in radialer Richtung größere Abmessungen aufweist als der Speicherturm (7).

7. Fluid- und/oder Energiebereitstellungseinrichtung nach einem der vorhergehenden Ansprüche, **dadurch gekennzeichnet, dass** ein Fundament (9) der Gründung als Wanne ausgestaltet ist und einen Innenbereich (32) aufweist, in dem der Speicherturm (7) angeordnet ist, wobei ein den Innenbereich (32) umgreifender Außenbereich (34) in axialer Richtung gegenüber dem Innenbereich (32) in die der ersten Tankanordnung (3) zugewandte Richtung versetzt ist.

8. Fluid- und/oder Energiebereitstellungseinrichtung nach einem der vorhergehenden Ansprüche, **dadurch gekennzeichnet, dass** ein Versatz zwischen dem Innenbereich (32) und dem Au-ßenbereich (34) in axialer Richtung mindestens den maximalen Abmessungen des Speicherturms (7) in radialer Richtung entspricht.

9. Fluid- und/oder Energiebereitstellungseinrichtung nach einem der vorhergehenden Ansprüche, **dadurch gekennzeichnet, dass** der Innenbereich (32) in einer gedachten Ebene und der Au-ßenbereich (34) in einer zweiten gedachten Ebene liegt, wobei der Innenbereich (32) und der Au-ßenbereich (34) in radialer Richtung über einen Übergangsbereich (33) miteinander verbunden sind.

10. Fluid- und/oder Energiebereitstellungseinrichtung nach einem der vorhergehenden Ansprüche, **dadurch gekennzeichnet, dass** die Solarnutzungseinrichtung (24) wenigstens einen Solarkollektor (26) und/oder ein Solarmodul aufweist, das mittels einer Schwenkeinrichtung (28) um wenigstens eine Schwenkachse (29,30) bezüglich des Speicherturms (7) schwenkbar ist.

11. Fluid- und/oder Energiebereitstellungseinrichtung nach einem der vorhergehenden Ansprüche, **dadurch gekennzeichnet, dass** der Solarkollektor (26) und/oder das Solarmodul in zumindest einer Stellung in die Wanne eingreifen, oder dass in der zumindest einen Stellung ein Abstand in axialer Richtung zwischen dem Solarkollektor (26) und/oder dem Solarmodul einerseits und dem Außenbereich (34) andererseits höchstens den maximalen Abmessungen des Speicherturms (7) in radialer Richtung entspricht.

12. Fluid- und/oder Energiebereitstellungseinrichtung nach einem der vorhergehenden Ansprüche, **dadurch gekennzeichnet, dass** an dem Speicherturm (7) eine den Speicherturm (7) zumindest bereichsweise umgreifende Traganordnung für die Solarnutzungseinrichtung (24) und/oder eine Stützanordnung (31) für die Windkraftanlage (25) ausgebildet sind.

13. Fluid- und/oder Energiebereitstellungseinrichtung nach einem der vorhergehenden Ansprüche, **dadurch gekennzeichnet, dass** die erste Tankanordnung (3) in axialer Richtung vollständig auf der der Traganordnung abgewandten Seite der Gründung angeordnet ist, und/oder dass die erste Tankanordnung (3) von der Traganordnung in axialer Richtung einen Abstand aufweist, der mindestens den maximalen Abmessungen des Speicherturms (7) in radialer Richtung entspricht.

14. Fluid- und/oder Energiebereitstellungseinrichtung nach einem der vorhergehenden Ansprüche, **dadurch gekennzeichnet, dass** der wenigstens eine Solarkollektor (26) strömungstechnisch an ein solarthermisches Kraftwerk angeschlossen ist, das zur Bereitstellung elektrischer Energie aus von dem Solarkollektor (26) bereitgestellter thermischer Energie ausgebildet ist.

15. Fluid- und/oder Energiebereitstellungseinrichtung nach einem der vorhergehenden Ansprüche, **dadurch gekennzeichnet, dass** der wenigstens eine Solarkollektor (26) strömungstechnisch an eine Energiespeichereinrichtung zur Zwischenspeicherung thermischer Energie angeschlossen ist.

## Claims

1. Fluid and/or energy supply device (1), with a solar utilisation device (24) and/or a wind power plant (25) and with a fluid storage device (2), wherein the fluid and/or energy supply device (1) is configured to split water into at least one fluid by electrolysis by means of energy provided by the solar utilisation device (24) and/or by the wind power plant (25) and for intermediate storage of the fluid by means of the fluid storage device (2), the fluid storage device (2) having a tank arrangement (3) for the fluid, which tank arrangement (3) comprises a storage tank (4) in a storage tower (7) which is anchored by means of a foundation and extends in the axial direction with respect to its longitudinal centre axis (11) into the foundation, and which tank arrangement (3) is bounded directly by a wall of the storage tower (7) in the radial direction outwards, **characterised in that** the tank arrangement (3) comprises a distance from the foundation in the axial direction with respect to the longitudinal central axis (11) of the storage tower (7), which distance corresponds to at least one maximum diameter of the storage tower (7) in the radial direction over its entire extent in the axial direction, and a region of the storage tower (7) present in the axial direction between the tank arrangement (3) and the foundation, which region is also bounded in the radial direction outwards by the wall of the storage tower (7), is filled with ambient air and is fluidically connected to an external environment of the storage tower (7) in order to realise pressure equalisation.

2. Fluid and/or energy supply device according to claim 1, **characterised in that** the tank arrangement (3) is a first tank arrangement (3), the storage tank (4) is a first storage tank (4) and the fluid is a first fluid, wherein in addition to the first tank arrangement (3) there is a second tank arrangement (5) for a second fluid, which comprises a plurality of separately arranged second storage tanks (6) which are arranged distributed in the circumferential direction around the storage tower (7), are fastened to the storage tower (7) in order to stiffen the storage tower (7) and are supported on the foundation and/or are fastened to the foundation and/or are fastened to the storage tower (7) a plurality of times.

3. Fluid and/or energy supply device according to one of the preceding claims, **characterised in that** the first tank arrangement (3) is completely present in the axial direction on the side of the second tank arrangement (5) facing away from the foundation.

4. Fluid and/or energy supply device according to one of the preceding claims, **characterised in that** the second storage tanks (6) are each attached to the storage tower (7) at a plurality of discrete attachment points or continuously in the axial direction.

5. Fluid and/or energy supply device according to one of the preceding claims, **characterised in that** further second storage tanks (16) are arranged at a distance from the storage tower (7) and are attached to the second storage tanks (6).

6. Fluid and/or energy supply device according to one of the preceding claims, **characterised in that** the foundation comprises a base plate (14) which has larger dimensions in the radial direction than the storage tower (7).

7. Fluid and/or energy supply device according to one of the preceding claims, **characterized in that** a base (9) of the foundation is designed as a trough and has an inner region (32) in which the storage tower (7) is arranged, an outer region (34) which surrounds the inner region (32) being offset in the axial direction with respect to the inner region (32) in the direction facing the first tank arrangement (3).

8. Fluid and/or energy supply device according to any one of the preceding claims, **characterised in that** an offset between the inner region (32) and the outer region (34) in the axial direction corresponds at least to the maximum dimensions of the storage tower (7) in the radial direction.

9. Fluid and/or energy supply device according to one of the preceding claims, **characterized in that** the inner region (32) lies in an imaginary plane and the outer region (34) lies in a second imaginary plane, the inner region (32) and the outer region (34) being connected to one another in the radial direction via a transition region (33).

10. Fluid and/or energy supply device according to one of the preceding claims, **characterised in that** the solar utilisation device (24) comprises at least one solar collector (26) and/or one solar module which can be pivoted about at least one pivot axis (29, 30) with respect to the storage tower (7) by means of a pivoting device (28).

11. Fluid and/or energy supply device according to one of the preceding claims, **characterised in that** the solar collector (26) and/or the solar module engage in the trough in at least one position, or **in that** in the at least one position a distance in the axial direction between the solar collector (26) and/or the solar module on the one hand and the outer region (34) on the other hand corresponds at most to the maximum dimensions of the storage tower (7) in the radial direction.

12. Fluid and/or energy supply device according to one of the preceding claims, **characterised in that** a carrier arrangement for the solar utilisation device (24) surrounding the storage tower (7) at least in regions and/or a support arrangement (31) for the wind power plant (25) are formed on the storage tower (7).

13. Fluid and/or energy supply device according to one of the preceding claims, **characterised in that** the first tank arrangement (3) is arranged completely in the axial direction on the side of the foundation facing away from the carrier arrangement, and/or in that the first tank arrangement (3) is at a distance from the carrier arrangement in the axial direction which corresponds at least to the maximum dimensions of the storage tower (7) in the radial direction.

14. Fluid and/or energy supply device according to one of the preceding claims, **characterised in that** the at least one solar collector (26) is fluidically connected to a solar thermal power plant which is configured to provide electrical energy from thermal energy provided by the solar collector (26).

15. Fluid and/or energy supply device according to one of the preceding claims, **characterised in that** the at least one solar collector (26) is fluidically connected to an energy storage device for intermediate storage of thermal energy.

## Revendications

1. Dispositif de mise à disposition de fluide et/ou d'énergie (1), avec un dispositif d'utilisation solaire (24) et/ou une eolienne (25) ainsi qu'avec un dispositif de stockage de fluide (2), dans lequel le dispositif de mise à disposition de fluide et/ou d'énergie (1) est réalisé pour décomposer l'eau en au moins un fluide par électrolyse au moyen de l'énergie mise à disposition par le dispositif d'utilisation solaire (24) et/ou par l'eolienne (25) et pour stocker temporairement le fluide au moyen du dispositif de stockage de fluide (2), dans laquelle le dispositif de stockage de fluide (2) dispose d'un agencement de réservoir (3) pour le fluide, qui présente un réservoir de stockage (4) dans une tour de stockage (7) ancrée au moyen d'une fondation et s'étendant dans la direction axiale par rapport à son axe médian longitudinal (11) dans la fondation, et qui est limitée dans la direction radiale vers l'extérieur directement par une paroi de la tour de stockage (7), **caractérisé en ce que** l'agencement de réservoir (3) présente, dans la direction axiale par rapport à l'axe médian longitudinal (11) de la tour de stockage (7), une écartement par rapport à la fondation qui correspond au moins à un diamètre maximal de la tour de stockage (7) dans la direction radiale sur toute son extension dans la direction axiale, et une zone de la tour de stockage (7) se trouvant dans la direction axiale entre l'agencement de réservoir (3) et la fondation, qui est également limitée dans la direction radiale vers l'extérieur par la paroi de la tour de stockage (7), est remplie d'air ambiant et est reliée fluidiquement à un environnement extérieur de la tour de stockage (7) pour réaliser un équilibrage de pression.

2. Dispositif de mise à disposition de fluide et/ou d'énergie selon la revendication 1, **caractérisé en ce que** l'agencement de réservoir (3) est un premier agencement de réservoir (3), le réservoir de stockage (4) est un premier réservoir de stockage (4) et le fluide est un premier fluide, dans lequel, en plus du premier agencement de réservoir (3), il existe un deuxième agencement de réservoir (5) pour un deuxième fluide, qui présente plusieurs deuxièmes réservoirs de stockage (6) disposés séparément, répartis dans la direction circonférentielle autour de la tour de stockage (7), fixés à celle-ci pour rigidifier la tour de stockage (7) et s'appuyant sur la fondation et/ou fixés à celle-ci et/ou fixés plusieurs fois à la tour de stockage (7).

3. Dispositif de mise à disposition de fluide et/ou d'énergie selon l'une des revendications précédentes, **caractérisé en ce que** le premier agencement de réservoir (3) est entièrement présent, dans la direction axiale, sur le côté du deuxième agencement réservoir (5) opposé à la fondation.

4. Dispositif de mise à disposition de fluide et/ou d'énergie selon l'une des revendications précédentes, **caractérisé en ce que** les deuxièmes réservoirs de stockage (6) sont fixés chacun à la tour de stockage (7) en plusieurs points de fixation discrets ou de manière continue dans la direction axiale.

5. Dispositif de mise à disposition de fluide et/ou d'énergie selon l'une des revendications précédentes, **caractérisé en ce que** d'autres deuxièmes réservoirs de stockage (16) sont disposés à distance de la tour de stockage (7) et sont fixés aux deuxièmes réservoirs de stockage (6).

6. Dispositif de mise à disposition de fluide et/ou d'énergie selon l'une des revendications précédentes, **caractérisé en ce que** la fondation présente une plaque de fond (14) qui présente des dimensions supérieures à celles de la tour de stockage (7) dans la direction radiale.

7. Dispositif de mise à disposition de fluide et/ou d'énergie selon l'une des revendications précédentes, **caractérisé en ce qu'**un fondement (9) de la fondation est réalisée sous la forme d'une cuve et présente une zone intérieure (32) dans laquelle est agencée la tour de stockage (7), une zone extérieure (34) entourant la zone intérieure (32) étant décalée dans la direction axiale par rapport à la zone intérieure (32) dans la direction tournée vers le premier agencement de réservoir (3).

8. Dispositif de mise à disposition de fluide et/ou d'énergie selon l'une des revendications précédentes, **caractérisé en ce qu'**un décalage entre la zone intérieure (32) et la zone extérieure (34) dans la direction axiale correspond au moins aux dimensions maximales de la tour de stockage (7) dans la direction radiale.

9. Dispositif de mise à disposition de fluide et/ou d'énergie selon l'une des revendications précédentes, **caractérisé en ce que** la zone intérieure (32) est située dans un plan imaginaire et la zone extérieure (34) est située dans un deuxième plan imaginaire, dans laquelle la zone intérieure (32) et la zone extérieure (34) sont reliées entre elles dans la direction radiale par une zone de transition (33).

10. Dispositif de mise à disposition de fluide et/ou d'énergie selon l'une des revendications précédentes, **caractérisé en ce que** le dispositif d'utilisation solaire (24) présente au moins un collecteur solaire (26) et/ou un module solaire qui peut pivoter autour d'au moins un axe de pivotement (29, 30) par rapport à la tour de stockage (7) au moyen d'un dispositif de pivotement (28).

11. Dispositif de mise à disposition de fluide et/ou d'énergie selon l'une des revendications précédentes, **caractérisé en ce que** le collecteur solaire (26) et/ou le module solaire s'engage dans la cuve dans au moins une position, ou **en ce que** dans ladite au moins une position, une écartement en direction axiale entre le collecteur solaire (26) et/ou le module solaire d'une part et la zone extérieure (34) d'autre part correspond au plus aux dimensions maximales de la tour de stockage (7) en direction radiale.

12. Dispositif de mise à disposition de fluide et/ou d'énergie selon l'une des revendications précédentes, **caractérisé en ce que** sur la tour de stockage (7) sont réalisés un agencement de support entourant au moins par zones la tour de stockage (7) pour le dispositif d'utilisation solaire (24) et/ou un agencement de soutènement (31) pour l'eolienne (25).

13. Dispositif de mise à disposition de fluide et/ou d'énergie selon l'une des revendications précédentes, **caractérisé en ce que** le premier agencement de réservoir (3) est entièrement disposé en direction axiale sur le côté de la fondation opposé à l'agencement de support, et/ou **en ce que** le premier agencement de réservoir (3) est présente, par rapport à l'agencement de support, dans la direction axiale, une écartement qui correspond au moins aux dimensions maximales de la tour de stockage (7) dans la direction radiale.

14. Dispositif de mise à disposition de fluide et/ou d'énergie selon l'une des revendications précédentes, **caractérisé en ce que** l'au moins un collecteur solaire (26) est raccordé fluidiquement à une centrale thermique solaire qui est réalisée pour la mise à disposition d'énergie électrique à partir d'énergie thermique mise à disposition par le collecteur solaire (26).

15. Dispositif de mise à disposition de fluide et/ou d'énergie selon l'une des revendications précédentes, **caractérisé en ce que** l'au moins un collecteur solaire (26) est raccordé fluidiquement à un dispositif de stockage d'énergie destiné à stocker temporairement de l'énergie thermique.
